# EUROPEAN PATENT SPECIFICATION

(11) **EP 0 411 376 B1**
(45) Date of publication and mention of the grant of the patent: **13.07.1994**
(21) Application number: 90113571.5
(22) Date of filing: 16.07.1990
(51) Int. Cl.: B60R 13/02, B29C 67/22, B29C 51/12

(54) **Panel, in particular for vehicle doors and relative method of manufacture**
Polster, insbesondere für Türen von Kraftfahrzeugen, und Verfahren zur Herstellung
Panneau, en particulier pour portes de véhicule, et son procédé de fabrication

(30) Priority: 04.08.1989 IT 6767789
(43) Date of publication of application: 06.02.1991
(73) Proprietor: FIAT AUTO S.p.A., 10135 Torino (IT)
(72) Inventor: Margiaria, Giorgio, I-10020 Baldissero Torinese (IT)
(74) Representative: Jorio, Paolo

(56) References cited:
- EP-A- 0 226 105
- PATENT ABSTRACTS OF JAPAN vol. 13, no. 178 (M-819)(3526) 26 April 1989;& JP-A-19046 (KASAI KOGYO CO. LTD) 12 January 1989
- PATENT ABSTRACTS OF JAPAN vol. 10, no. 176 (M-491)(2232) 20 June 1986;& JP-A-61 25829 (KASAI KOGYO CO. LTD) 04 February 1986

## Description

The invention refers to lining panels, in particular for vehicle doors, and to the relative method of manufacture. Various types of panels are known which comprise an insert having a decorative lining on one side, which is connected to the supporting structure of the panel. Generally in these the insert is substantially flat and can be connected to the structure by glueing, or by compressing, or by cold riveting. The said inserts are therefore connected to the supporting structure only superficially and are not closely connected to it, nor do they serve as reinforcement for the supporting structure.

Therefore, when the panel is subjected to stress from vibrations or tensions, which in the case of vehicle doors are very intense, the insert is not obliged to follow the sudden deformation. The sliding which occurs between the insert described and the structure therefore generates, in the interior of the vehicle, irritating creaks which are difficult to eliminate.

The technical problem of the invention consists in creating a panel which is highly robust and free of the noise.

It is also known from the document EP-A-0 226 105 a foamed polyurethane molding useful for interior parts of a motor vehicle, i.e. head rests, sunvisors, arm rests, crash pads and bumpers of the vehicle. In order to obviate the use of parting agents for protection of the mold and for ensuring release of the molding, an expansible film, preferably of polyurethane with high tensile stretchability, in the form of a flat sheet or a bag, is interposed between the the mold and the foamed resin.

In some embodiments disclosed in this document, i.e. the crash pads, an insert of a hard material is placed between one molding surface and the expansible film, for the purpose of a secure attachment to the vehicle body, whereby the insert is not a decorative lining, and is not provided on the outer surface of the panel. The insert is provided with anchorage areas in from of tapered sectional or stepped areas, which cause enfolding portions of the resin to securely grip the insert in position. The foamed resin molding is also provided with a film-like cover member on the opposite side of the expansible film, which will represent the visible outer surface of the molded part.

According to the invention it is now provided a panel for interior parts of a vehicle, in particular vehicle doors, comprising a support of foamed polyurethane, a rigid insert formed on a first side with means of anchorage, and a sheet fitted onto said first side of said insert and compressed by said foamed polyurethane during its expansion and polymerization to shape said support in such a way as to adhere intimately to said means of anchorage through said sheet, said panel being characterized in that said insert includes a layer of plastic and a decorative lining provided on a side thereof opposite to said first side, said insert being hot-molded to assume a three dimensional shape with at least two curved edges, said means of anchorage including a perimeter sections of said edges in form of an undercut, and a plurality of oblong elements in form of undercut protruding perpendicularly from said first side.

The properties of the invention will be more clearly shown by the following description of a preferred embodiment, made as an example not restrictive, in conjunction of the attached drawings, in which:
Fig. 1 is a section of a panel for vehicle doors, in accordance with the invention;
Fig. 2 is a section on an enlarged scale of a portion of Fig. 1;
Fig. 3 is a partial section of a mold for the manufacture of the panel as in Fig. 1 in an intermediate stage of processing;
Fig. 4 is the section of the mould as in Fig. 3 in the final stage of processing.

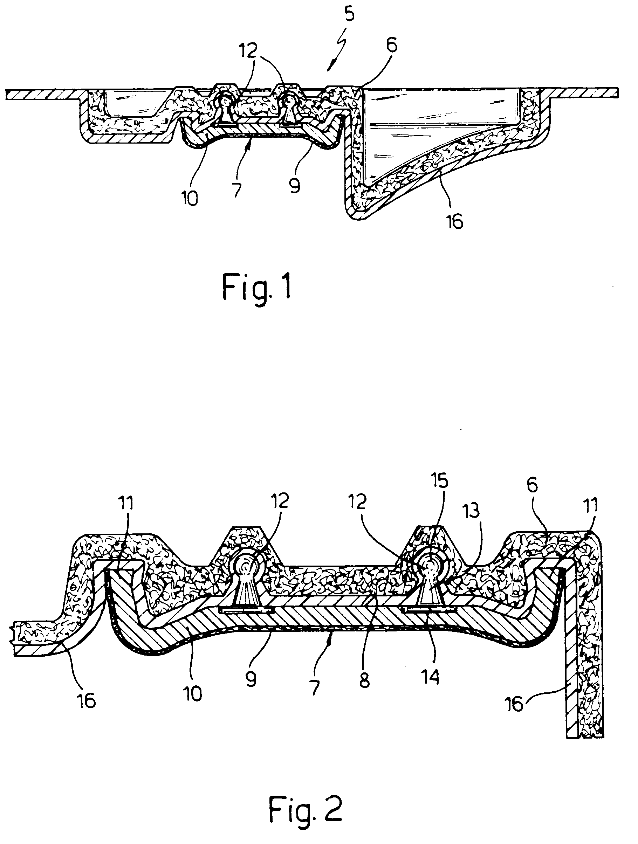

With reference to Figures 1 and 2, by 5 is generally indicated a decorative lining panel for a vehicle door. Panel 5 comprises essentially a support 6 consisting of a layer of polymerized foamed polyurethane appropriately formed in three dimensions. Panel 5 comprises a rigid insert 7 connected on a first side, or surface 8, with the support 6. The insert 7 has a decorative lining 9 on the other side.

In particular, the support 6 is obtained by vacuum injecting the polyurethane into a mould, by means of the known technology of foaming. In its turn the insert 7 is formed from a layer of plastic 10 whilst the lining 9 is in fabric. It can be made from the material known commercially as "Woodstock".

The insert 7 is hot-moulded so that it assumes a three dimensional shape, with two or more curved edges. These edges 11 can include perimeter sections in the form of an undercut, which constitute means of anchorage of the insert 7 to the support 6.

Furthermore, in layer 10 are placed a multiplicity of oblong elements, which shall henceforth be referred to as "pine-nut shapes" 12 and they also have the function of acting as means of anchorage. Each pine-nut 12 (Fig. 2) is arranged substantially perpendicular to the surface of the side 8 and has a body 13 which is slightly conical. Each pine-nut is, moreover, fitted with a base flange 14 fixed to the layer 10 and a swelling or head 15 at its free extremity, which thus forms other undercuts.

Between the insert 7 and the support 6 is placed a thermoformed sheet 16, in foam PVC. It is compressed by the foamed polyurethane of the support 6 in the stage of expansion and polymerization, particularly in the undercuts of the edges 11 and of the heads 15. In this way the support 6 and the insert 7 are intimately connected, forming a single entity.

Therefore, on the one hand the insert 7 contributes to the robustness and the mechanical stability of the panel 5, and on the other hand any tension or vibration of the support 6 is followed by the insert 7, avoiding any sliding between the two parts and therefore any noise or creaking of the panel. The incorporating into a single entity of the means of anchorage also allows greater flexibility in the design and in the distribution of the decorative effect of the fabric 9 on the surface of the panel 5.

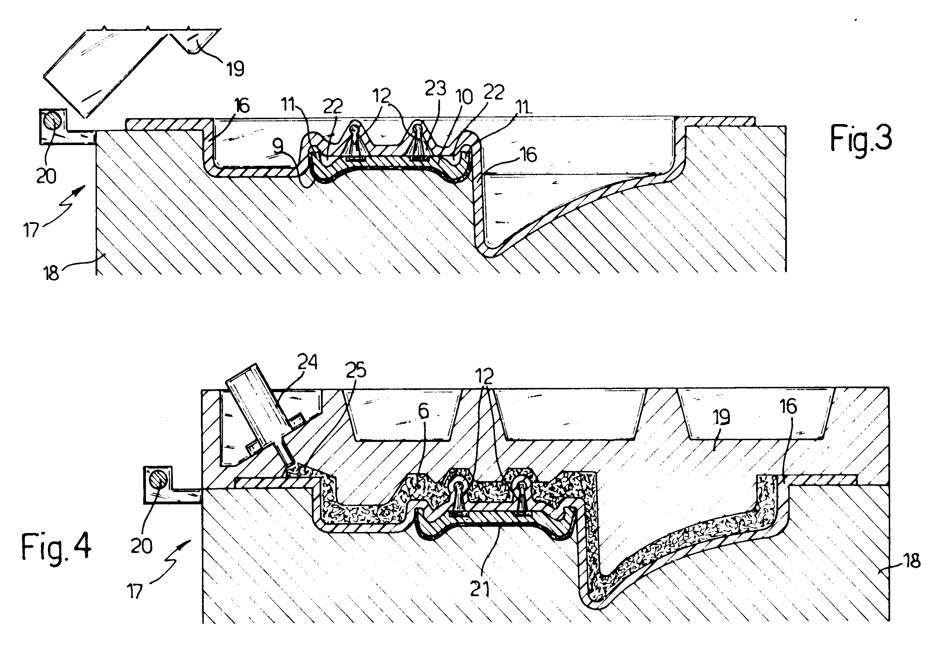

For the manufacture of the panel 5 an injection mould is used, generically indicated as 17 (Figures 3 and 4), which includes a fixed part 18 and an opening part 19 hinged on a fulcrum 20 to the fixed part 18. Firstly with the mould 17 open, the insert 7, formed and fitted with pine-nuts 12, is placed with the decorative lining 9 in contact with a housing 21 of the fixed part 18. The housing 21 also has a centring function for the insert 7.

Afterwards on the insert 7 and on the part 18 of the mould 17, is placed the thermoformed sheet 16 in foam PVC, with a slight dimensional excess in relation to panel 5. The sheet 16 is placed on the insert 7 leaving spaces 22 between the edges 11 and the layer 10 and spaces 23 between the pine-nuts and the layer 10 itself.

The gap between the two parts 18 and 19 is made and the mould 17 is now closed in the usual fashion.

Finally, the polyurethane is vacuum injected into the mould 17, via a head 24 of the feed pipe. The polyurethane is thus foamed and the polymerization stage commences. During this stage, when the foamed polyurethane is created, the thermoformed sheet 16 is compressed onto the layer 10 and therefore also onto the edges 11 and onto the pine-nuts 12. When the reaction has taken place, the foamed polyurethane of the support 6 has incorporated intimately both the edges 11 and the pine-nuts 12, eliminating the spaces 22 and 23, enabling the insert 7 and the sheet 16 to form a single entity with the support 7. Now the mould 17 can be opened and eliminate the riser 25 from the panel 5.

Naturally, various modifications and improvements can be made to the panel 5 and to the relative method of manufacture without leaving the ambit of the invention. For example, the insert 7 need not have the undercuts on the edges 11, or the pine-nuts 12. Moreover, the lining 9 can consist of other than fabric.

## Claims

1. A panel for interior parts of a vehicle, in particular vehicle doors, comprising a support (6) of foamed polyurethane, a rigid insert (7) formed on a first side (8) with means of anchorage (11, 12), and a sheet (16) fitted onto said first side (8) of said insert (7) and compressed by said foamed polyurethane during its stage of expansion and polymerization to shape said support (6) as to adhere intimately to said means of anchorage (11, 12) through said sheet (16), characterized in that said insert (7) includes a layer of plastic (10) and a decorative lining (9) provided on a side thereof opposite to said first side (8), said insert (7) being hot-molded to assume a three dimensional shape with at least two curved edges (11), said means of anchorage (11, 12) including a perimeter sections of said edges (11) in form of an undercut, and a plurality of oblong elements (12) in form of undercut protruding perpendicularly from said first side (8).

2. A panel according to claim 1, characterized in that said sheet (16) is thermoformed in foam PVC, the exposed surface of the panel being formed by said decorative lining (9) and by said thermoformed sheet (16).

3. A panel according to claim 1 or 2, characterized in that each one of said oblong elements (12) includes a frusto-conical body (13) having a swelling (15) at its free extremity, and a base flange (14) fixed to said layer of plastic (10).

4. A panel according to any previous claim, characterized in that said decorative lining (9) is fabric.

5. A method of manufacture of a panel for interior parts of a vehicle, in particular vehicle doors, comprising the following stages:
- prepare a rigid insert (7) having a layer of plastic (10) and a decorative lining (9) as to assume a three dimensional shape with at least two curved edges (11) having perimeter undercut sections;
- prepare a plurality of oblong elements (12), each one having a swelling (15) at its free extremity;
- secure said plurality of elements (12) to said layer of plastic (10) as to protrude each one substantially perpendicularly from the side (8) opposite to said decorative lining (9);
- place said insert (7) into a housing (20) of a part (18) of a mold (17) for the injection of foam plastic materials;
- cover said opposite side (8) and said elements (12) with a thermoformed sheet (16) in foamed PVC, with a slight dimensional excess in relation to the panel;
- close said mold (17), and vacuum inject a layer of foamed polymerizable polyurethane (6) in said closed mold (17) above said sheet (16);
- open said mold (17), and remove the panel; and
- remove a molding riser (25) from the panel.

## Patentansprüche

1. Füllwand für die Innenteile eines Fahrzeuges, insbesondere für die Fahrzeugtüren, mit einer Halterung (6) aus geschäumtem Polyurethan, einer starren Einlage (7), die auf einer ersten Seite (8) mit Verankerungseinrichtungen (11, 12) ausgebildet ist, und einer Folie (16), die auf die erste Seite (8) der Einlage (7) gepaßt und durch das geschäumte Polyurethan während seiner Phase der Expansion und Polymerisation zum Formen der Halterung (6) so zusammengedrückt ist, daß diese über die Folie (16) fest an den Verankerungseinrichtungen (11, 12), haftet, dadurch gekennzeichnet, daß die Einlage (7) eine Kunststoffschicht (10) und eine dekorative Verkleidung (9) aufweist, die auf einer Seite vorgesehen ist, die der ersten Seite (8) gegenüberliegt, wobei die Einlage (7) so warmgeformt ist, daß sie eine dreidimensionale Form mit wenigsten zwei gekrümmten Rändern (11) einnimmt, und die Verankerungseinrichtungen (11, 12) Umfangsabschnitte der Ränder (11) in Form einer Unterschneidung und mehrere längliche unterschneidungsförmig Elemente (12) einschließen, die senkrecht von der ersten Seite (8) vorstehen.

2. Füllwand nach Anspruch 1, dadurch gekennzeichnet, daß die Folie (16) aus PVC-Schaumstoff warmgeformt ist und die freiliegende Oberfläche der Füllwand von der dekorativen Verkleidung (9) und der warmgeformten Folie (16) gebildet wird.

3. Füllwand nach Anspruch 1 oder 2, dadurch gekennzeichnet, daß jedes längliche Element (12) einen kegelstumpfförmigen Körper (13) mit einer Ausbauchung (15) am freien Ende und einen Basisflansch (14) aufweist, der an der Kunststoffschicht (10) befestigt ist.

4. Füllwand nach einem vorhergehenden Anspruch, dadurch gekennzeichnet, daß die dekorative Verkleidung (9) aus einem textilen Material besteht.

5. Verfahren zum Herstellen einer Füllwand für die Innenteile eines Fahrzeuges, insbesondere die Fahrzeugtüren, welches die folgenden Schritte umfaßt:
- Bilden einer starren Einlage (7) mit einer Kunststoffschicht (10) und einer dekorativen Verkleidung (9), derart, daß diese eine dreidimensionale Form mit wenigstens zwei gekrümmten Rändern (11) einnimmt, die Umfangsunterschneidungsabschnitte aufweisen,
- Bilden mehrere langgestreckter Elemente (12), von denen jedes eine Ausbauchung (15) an seinem freien Ende aufweist,
- Befestigen der Elemente (12) an der Kunststoffschicht (10) derart, daß jedes im wesentliche senkrecht von der Seite (8) vorsteht, die der dekorativen Verkleidung (9) gegenüberliegt,
- Anordnen der Einlage (7) in einem Gehäuse (20) eines Teils (18) einer Form (17) zum Einspritzen von Schaumkunststoffmaterialien,
- Überdecken der gegenüberliegenden Seite (8) und der Elemente (12) mit einer warmgeformten Folie (16) aus geschäumtem PVC mit einem leichten Übermaß bezüglich der Füllwand,
- Schließen der Form (17) und Einspritzen einer Schicht aus polymerisierbarem geschäumtem Polyurethan (6) unter Vakuum in die geschlossene Form (17) über der Folie (16),
- Öffnen der Form (17) und Entfernen der Füllwand und
- Entfernen des Angusses (25) von der Füllwand.

## Revendications

1. Panneau pour parties intérieures d'un véhicule, en particulier des portes de véhicule, comprenant un support (6) enpolyuréthane expansé, un insert rigide (7) comportant des moyens d'ancrage (11,12) sur une première face (8), et une feuille (16) appliquée sur ladite première face (8) dudit insert et comprimée par ledit polyuréthane expansé pendant son stade d'expansion et de polymérisation de manière à former ledit support (6) de sorte qu'il adhère intimement auxdits moyens d'ancrage (11,12) à travers ladite feuille (16), caractérisé en ce que ledit insert (7) comprend une couche de matière plastique (10) et un revêtement décoratif (9) prévu sur une face de l'insert opposée à ladite première face (8), ledit insert (7) étant moulé à chaud pour prendre une forme tridimensionnelle comportant au moins deux bords recourbés (11), les dits moyens d'ancrage (11,12) comprenant une partie périmétrique desdits bords (11) à bout renflé et une pluralité d'éléments oblongs (12) à bout renflé qui font saillie perpendiculairement à partir de ladite première face (8).

2. Panneau suivant la revendication 1, caractérisé en ce que ladite feuille (16) est thermoformée en chlorure de polyvinyle expansé, les surfaces exposées du panneau étant constituées par ledit revêtement décoratif (9) et ladite feuille thermoformée (16).

3. Panneau suivant la revendication 1 ou 2, caractérisé en ce que chacun desdits éléments oblongs (12) comprend un corps tronconique (13) présentant un renflement (15) à son extrémité libre, et une collerette de base(14) fixée à ladite couche de matière plastique (10).

4. Panneau suivant une quelconque des revendications précédentes , caractérisé en ce que ledit revêtement décoratif (9) est un tissu.

5. Procédé de fabrication d'un panneau pour des parties intérieures d'un véhicule, en particulier des portes de véhicule, comprenant les étapes suivantes :
- préparation d'un insert rigide (7) comportant une couche de matière plastique (10) et un revêtement décoratif (9),de manière à lui donner une configuration tridimensionnelle comportant au moins deux bords recourbés (11) à parties périmétriques renflées ;
- préparation d'une pluralité d'éléments oblongs (12) ayant chacun un renflement (15) à leur extrémité libre ;
- fixation de ladite pluralité d'éléments (12) à ladite couche de matière plastique (10) de façon à ce qu'ils fassent saillie chacun sensiblement perpendiculairement à partir de la face (8) opposée audit revêtement décoratif (9);
- mise en place dudit insert (7) dans un réceptacle (20) d'une partie (18) d'un moule (17) pour l'injection d'une matière plastique expansée ;
- recouvrement de ladite face opposée (8) et desdits éléments (12) avec une feuille thermoformée (16) en chlorure de polyvinyle expansé, ayant des dimensions légèrement supérieures à celles du panneau ;
- fermeture dudit moule (17) et injection sous vide d'une couche de polyuréthane polymérisable expansé (6) dans ledit moule fermé (17) au-dessus de ladite feuille (16) ;
- ouverture dudit moule (17) et extraction du panneau ; et
- élimination d'un jet de moulage (25) du panneau.
